# EUROPÄISCHE PATENTANMELDUNG

(11) **EP 4 803 331 A1**
(43) Veröffentlichungstag der Anmeldung: **09.09.2026**
(21) Anmeldenummer: 26162629.5
(22) Anmeldetag: 05.03.2026
(51) Int. Cl.: B60D 1/02, B60D 1/26, B65F 1/02, B65F 1/14

(54) **KUPPLUNGSVORRICHTUNG ZUR ANKOPPLUNG EINES KUPPLUNGSGEGENELEMENTES, TRANSPORTFAHRZEUG, INSBESONDERE FAHRBARER TRANSPORTBEHÄLTER UND/ODER FAHRBARER ENTSORGUNGSLOGISTIKBEHÄLTER, SOWIE ZUGVERBAND**

(30) Priorität: 05.03.2025 DE 102025108279
(71) Anmelder: AUTECO Unternehmens- und Organisationsberatung GmbH, 6370 Reith bei Kitzbühel (AT)
(72) Erfinder: BÜCHL,Reinhard, 85120 Hepberg (DE)
(74) Vertreter: Liebl, Thomas

(57) **Zusammenfassung**

Die Erfindung betrifft eine Kupplungsvorrichtung zur Ankopplung eines Kupplungsgegenelementes, bevorzugt zur Ankopplung einer Deichsel eines Transportfahrzeugs, mit einem Zugbolzen (21), der von einem Einführungsfreiraum (20) umgeben ist. Ferner ist ein Sicherungselement (26) vorgesehen, das dem Zugbolzen zugeordnet ist und/oder das in einer Ruhe- und Schließposition mittels eines Vorspannelementes (33, 34) vorzugsweise in Richtung des Zugbolzens (21) vorgespannt ist. Das Sicherungselement (26) ist dergestalt beweglich gelagert, dass das Sicherungselement (26) gegen die Vorspannkraft in eine Freigabeposition verlagerbar ist, in der ein Kupplungsauge (3) eines Kupplungsgegenelementes (11) nach unten absenkbar ist, wobei das Sicherungselement (26) nach einem definierten Absenkweg des Kupplungsgegenelementes (11) dergestalt positioniert ist, dass das Vorspannelement (33, 34) zurück in die Ruhe- und Schließposition verlagerbar ist, in der das Sicherungselement (26) einen Randbereich (41) des am Zugbolzen (21) eingehängten Kupplungsauges (3) übergreift und das Kupplungsgegenelement (11) gegen ein Abheben vom Zugbolzen (21) sichert.

## Beschreibung

Die Erfindung betrifft eine Kupplungsvorrichtung zur Ankopplung eines Kupplungsgegenelementes, bevorzugt zur Ankopplung einer Deichsel eines Transportfahrzeugs, ein Transportfahrzeug, insbesondere einen fahrbaren Transportbehälter und/oder einen fahrbaren Entsorgungslogistikbehälter, sowie einen Zugverband aus mehreren Transportfahrzeugen.

Transportfahrzeuge mit einer Kupplungsvorrichtung für eine Deichsel als Kupplungsgegenelement eines weiteren Transportfahrzeugs oder einer Zugmaschine zur Bildung eines Zugverbands sind in einer Vielzahl unterschiedlicher Ausführungsformen allgemein bekannt.

Zudem sind Transportfahrzeuge als fahrbare Transportbehälter und/oder fahrbare Entsorgungslogistikbehälter zum Transport und/oder zur Entsorgung unterschiedlicher Güter in vielen Ausführungsformen allgemein bekannt. Beispielsweise werden im Produktions- und/oder Montagebereich von Industrieunternehmen anfallende Abfälle in Behältern gesammelt und für eine Wiederverwertung oder Beseitigung abtransportiert. Solche bekannten Behälter sind üblicherweise mit Fahrrollen und einer Kupplungsvorrichtungseinrichtung ausgerüstet und sind untereinander sowie mit kleinen Nutzfahrzeugen als Zugmaschinen für einen innerbetrieblichen Transport zu einem Zugverband koppelbar.

Dazu verwendete bekannte Kupplungsvorrichtungen sind in der rauen Umgebung von Produktions- und/oder Montagebereichen oftmals störanfällig und/oder aufwendig in der Bedienung. Die Gründe liegen üblicherweise in einem komplexen Aufbau und/oder fehlender Robustheit und/oder ungünstiger Anordnung von Bedienelementen, wodurch auch die Herstellung einer Kupplungsvorrichtung oft aufwendig und kostenintensiv ist.

Aus der DE 20 2010 001 450 U1 ist eine Kupplungsvorrichtung mit einem Zugbolzen sowie einem schwenkbar gelagerten Kupplungshebel mit Fangschale bekannt, mittels der ein Deichselauge an dem Zugbolzen gehalten werden kann. Die Fangschale ist dabei gegen die Kraft einer Feder zwischen einer Fangposition und einer Freigabeposition verschwenkbar, um ein An- und Abkoppeln zu ermöglichen.

Aus der US 2013 / 0 190 987 A1 ist ein Lenksystem für ein selbstfahrendes Fahrzeug bekannt, das in einem Zugverband aus mehreren selbstfahrenden Fahrzeugen betrieben wird. Beschrieben wird insbesondere eine Steuerungseinrichtung mit Winkel- und Abstandssensoren sowie einer Regeleinheit zur Ansteuerung einzeln ansteuerbarer Antriebseinheiten in Abhängigkeit von einem zwischen Fahrzeugen erfassten Winkel- und Abstandssignal.

Aufgabe der Erfindung ist es, eine Kupplungsvorrichtung zur Ankopplung eines Kupplungsgegenelementes, bevorzugt zur Ankopplung einer Deichsel eines Transportfahrzeugs, bereitzustellen, die eine robuste, kompakte und einfach aufgebaute Konstruktion aufweist, benutzerfreundlich ist und kostengünstig gefertigt werden kann. Zudem ist es eine weitere Aufgabe der Erfindung, ein Transportfahrzeug sowie einen Zugverband mit mehreren Transportfahrzeugen mit einer derartigen Kupplungsvorrichtung vorzuschlagen.

Diese Aufgabe wird mit den Merkmalen der unabhängigen Ansprüche gelöst. Vorteilhafte und optionale Ausgestaltungen sind Gegenstand der darauf rückbezogenen Unteransprüche.

Gemäß Anspruch 1 weist die Kupplungsvorrichtung einen, beispielsweise zylindrischen, Zugbolzen auf, der in Hochachsenrichtung gesehen in etwa vertikal nach oben abragt. Ferner ist ein Sicherungselement vorgesehen, das dem Zugbolzen zugeordnet ist und/oder das in einer Ruhe- und Schließposition mittels eines Vorspannelementes in eine definierte Richtung, vorzugsweise in Richtung des Zugbolzens vorgespannt ist.

Das Sicherungselement ist beweglich gelagert, vorzugsweise relativ zum Zugbolzen beweglich gelagert, dergestalt, dass das Sicherungselement gegen die Vorspannkraft des Vorspannelements aus der Ruhe- und Schließposition in eine Freigabeposition verlagerbar ist, in der ein Kupplungsauge eines Kupplungsgegenelementes nach unten in Richtung der Kupplungsposition absenkbar ist, wobei das Sicherungselement nach einem definierten Absenkweg des Kupplungsgegenelementes dergestalt positioniert ist, vorzugsweise außer Kontakt mit dem Kupplungsgegenelement ist oder gelangt, dass das Vorspannelement zurück in die Ruhe- und Schließposition verlagerbar ist, in der das Sicherungselement einen Randbereich des am Zugbolzen eingehängten Kupplungsauges übergreift und/oder überdeckt und das Kupplungsgegenelement gegen ein Abheben vom Zugbolzen sichert.

Die erfindungsgemäße Kupplungsvorrichtung eignet sich grundsätzlich für alle Kupplungsvorgänge, bei denen eine Zugbolzen funktionssicher mit einem Kupplungsauge eines Kupplungsgegenelementes gekuppelt und das Kupplungsauge gegen Abheben geschützt werden soll. Sie verfügt über eine kompakte, robuste und einfach aufgebaute Konstruktion, die eine zuverlässige Funktion gewährleistet, benutzerfreundlich in der Handhabung ist und eine kostengünstige Herstellung ermöglicht.

Die Kupplungsvorrichtung weist gemäß einer besonders bevorzugten konkreten Ausführungsform ein Kupplungsgehäuse auf. Dieses schützt die Komponenten der Kupplungsvorrichtung zuverlässig vor äußeren Einflüssen wie Verschmutzung und mechanischer Beschädigung. Darüber hinaus dient es als stabile Basis für die geordnete Anordnung und sichere Lagerung der einzelnen Bauteile und Komponenten der Kupplungsvorrichtung.

Besonders bevorzugt ist in diesem Zusammenhang eine Ausführungsform, bei der das Kupplungsgehäuse quaderförmig aufgebaut ist und/oder eine Bodenwand, eine Deckenwand und wenigstens eine Seitenwand, vorzugsweise zwei voneinander in Querrichtung beabstandete und einander in Querrichtung gegenüberliegende Seitenwände, aufweist.

Das Kupplungsgehäuse weist gemäß einer weiteren besonders bevorzugten Ausführungsform vorzugsweise eine Einführöffnung auf, an die sich ein Einführfreiraum anschließt, der den Zugbolzen umgibt und ausgebildet ist, ein in diesem oberhalb bzw. über dem Zugbolzen positioniertes Kupplungsauge eines Kupplungsgegenelements, vorzugsweise ein in diesem oberhalb bzw. über dem Zugbolzen positioniertes Deichselauge einer Deichsel, aufzunehmen und entlang des Zugbolzens nach unten in Richtung einer Kupplungsposition abzusenken. Dadurch wird eine gezielte und erleichterte Aufnahme des Kupplungsgegenelements ermöglicht.

Beispielsweise kann das Kupplungsgehäuse gemäß einer bevorzugten konkreten Lösung so ausgebildet sein, dass es ein Basisteil und ein Oberteil aufweist. Die Richtungsangaben "oben", "unten", "Basis", "Ober" etc. beziehen sich hier immer auf die Hochachsenrichtung. Das Basisteil, bevorzugt ein Blechpressteil, kann dann zum Beispiel U-förmig ausgebildet sein und eine Bodenwand sowie zwei seitlich gegenüberliegende und nach oben weisende, vorzugsweise abgekantete, Seitenwände, vorzugsweise mit endseitigen Seitenflanschen aufweisen. Das Oberteil, vorzugsweise ein Blechteil, weist dagegen eine das Basisteil oberseitig verschließende Deckenwand, vorzugsweise eine im wesentlichen plane Deckenwand, auf und ist mit den Seitenwänden, bevorzugt mit den Seitenflanschen, verbunden, vorzugsweise verschweißt und/oder verschraubt. Dadurch wird eine stabile und geschlossene Gehäusestruktur geschaffen. Zudem kann das Oberteil an einer Einführöffnung des Kupplungsgehäuses zu beiden Seiten des Zugbolzens und damit auch beidseitig des Sicherungselementes in die Einführöffnung einragende, zum Beispiel abgekantete, Laschen aufweisen, die die Einführöffnung teilweise abdecken. Diese Gestaltung erleichtert das gezielte Einführen eines Kupplungsauges eines Kupplungsgegenelementes.

Die Laschen sind bevorzugt einstückig mit der Deckenwand des Oberteils ausgebildet und aus dieser nach unten, bezogen auf die Hochachsenrichtung, abgebogen bzw. abgekantet. Die Laschen können sich beispielhaft im Wesentlichen parallel zu den Seitenwänden des Basisteils erstrecken und in Richtung der Bodenwand vorstehen. Alternativ oder zusätzlich können die Laschen in der Ruhe- und Schließposition des Sicherungselementes beabstandet oberhalb der Bodenwand sowie beabstandet oberhalb eines in Kupplungsposition befindlichen Kupplungsauges enden, sodass ein Schwenkspalt für ein ungehindertes Verschwenken eines beispielsweise als Deichsel ausgebildeten Kupplungsgegenelementes freibleibt. Die Laschen begrenzen die Einführöffnung seitlich und oberseitig zumindest teilweise, sodass das Kupplungsauge beim Einführen in Richtung des Zugbolzens seitlich geführt wird. Gleichzeitig wird ein seitliches Ausheben oder Verkanten des Kupplungsauges im Bereich der Einführöffnung konstruktiv erschwert. Durch diese konstruktive Ausgestaltung wird die Einführöffnung geometrisch definiert, ohne dass hierfür zusätzliche separate Führungselemente vorgesehen sein müssen.

Die Kupplungsvorrichtung kann natürlich nicht nur aus Blechteilen hergestellt sein, sondern alternativ und abhängig von den jeweiligen Einsatzfällen auch aus anderen stabilen Materialien wie beispielsweise Guss oder hochfestem Kunststoff hergestellt sein.

Grundsätzlich könnte vorgesehen sein, das Sicherungselement an der Kupplungsvorrichtung so auszubilden, dass es mittels des Kupplungsgegenelementes gegen die Vorspannkraft des Vorspannelements aus der Ruhe- und Schließposition in die Freigabeposition verlagert werden kann. Hier gestaltet sich jedoch insbesondere das Lösen der Kupplungsverbindung unter Umständen als aufwendig und schwierig. Dementsprechend ist gemäß einer besonders bevorzugten Ausführungsform vorgesehen, dass das Sicherungselement mit einer, vorzugsweise an der Kupplungsvorrichtung bzw. dem Kupplungsgehäuse angeordneten, Sicherungselement-Betätigungseinrichtung zusammenwirkt, mit der das Sicherungselement - beispielweise durch eine Bedienperson - gegen die Vorspannkraft des Vorspannelementes in die Freigabeposition verlagerbar ist. Dies ermöglicht eine gezielte und kontrollierte Verlagerung des Sicherungselementes in die gewünschte Position, wodurch die Handhabung insbesondere bei häufigen Kuppel- und Entkuppelvorgängen erleichtert wird.

Gemäß einer konkreten Ausgestaltung ist vorgesehen, dass die Sicherungselement-Betätigungseinrichtung durch einen an der Kupplungsvorrichtung schwenkbar gelagerten Schwenkhebel gebildet ist, der an seiner ersten Hebelseite das Sicherungselement und an seiner zweiten Hebelseite ein für eine Betätigung, beispielsweise bzw. vorzugsweise für eine Hand- und/oder Fußbetätigung, von außerhalb der Kupplungsvorrichtung frei zugängliches Betätigungshebelteil aufweist, mit dem das Sicherungselement gegen die Vorspannkraft des Vorspannelementes in die Freigabeposition schwenkbar ist. Der Einsatz eines derartigen zweiseitigen Schwenkhebels als Sicherungselement-Betätigungseinrichtung ermöglicht eine einfache, intuitive und ergonomische Bedienung. Durch das frei zugängliche Betätigungshebelteil kann das Sicherungselement problemlos von außerhalb der Kupplungsvorrichtung betätigt werden, wodurch insbesondere eine komfortable Hand- oder Fußbetätigung möglich ist. Dies reduziert den Kraftaufwand beim Lösen der Kupplungsverbindung und erleichtert den Kuppelvorgang, insbesondere bei häufigem Einsatz.

Besonders bevorzugt ist weiter eine Ausführungsform, bei der der Schwenkhebel schwenkbar an einer vertikalen Achse der Kupplungsvorrichtung gelagert ist. Hier kann dann zudem optional vorgesehen sein, dass sich die vertikale Achse im Wesentlichen in Hochachsenrichtung, bevorzugt im Kupplungsgehäuse, höchst bevorzugt im Kupplungsgehäuse zwischen der Bodenwand und der Deckenwand, erstreckt. Die schwenkbare Lagerung des Hebels an einer vertikalen Achse innerhalb der Kupplungsvorrichtung gewährleistet eine kompakte, zuverlässige, platzsparende und geschützte Anordnung der Schwenkmechanik. Zudem sorgt die senkrechte Lagerung für eine stabile Kinematik, wodurch die Betätigung des Schwenkhebels kontrolliert und zuverlässig erfolgt.

Gemäß einer weiteren besonders bevorzugten Ausgestaltung ist vorgesehen, dass das Kupplungsgehäuse, vorzugsweise in einer Seitenwand des Kupplungsgehäuses, eine Hebelöffnung aufweist, durch die der Schwenkhebel dergestalt nach außerhalb des Kupplungsgehäuses geführt ist, dass das Betätigungshebelteil außerhalb der Kupplungsvorrichtung frei zugänglich ist und von dem Kupplungsgehäuse abragt, wobei die Hebelöffnung zumindest in Schwenk- und Verlagerungsrichtung des Schwenkhebels gesehen, ein Übermaß gegenüber diesem aufweist. Die Hebelöffnung im Kupplungsgehäuse ermöglicht eine sichere und gezielte Führung des Schwenkhebels nach außen und/oder insgesamt. Das vorgesehene Übermaß der Hebelöffnung sorgt dafür, dass der Schwenkhebel in einer Art Schlitzführung geführt werden kann, sodass er ohne Verklemmen oder Verkippen ungehindert verlagert werden kann. Zudem kann die Hebelöffnung so dimensioniert werden, dass der Schwenkweg gezielt eingestellt und vorgegeben ist. Dadurch wird eine kontrollierte Betätigung der Kupplungsvorrichtung ermöglicht.

Gemäß einer weiteren besonders bevorzugten Ausführungsform ist vorgesehen, dass das Vorspannelement einerseits mit dem Kupplungsgehäuse und andererseits mit der Sicherungselement-Betätigungseinrichtung verbunden ist. Dieser Aufbau gewährleistet eine definierte und reproduzierbare Kraftübertragung. Dadurch wird sichergestellt, dass das Sicherungselement zuverlässig in der Ruhe- und Schließposition gehalten wird, bis es gezielt betätigt wird. Dies erhöht die Betriebssicherheit und verhindert ein unbeabsichtigtes Öffnen der Kupplung.

Gemäß einer weiteren besonders bevorzugten Ausführungsform ist vorgesehen, dass das Vorspannelement durch wenigstens eine Feder, vorzugsweise durch wenigstens eine Zugfeder, gebildet ist. Die Verwendung einer Feder, insbesondere einer Zugfeder, als Vorspannelement ermöglicht eine dauerhafte, gleichmäßige und wartungsarme Kraftaufbringung auf das Sicherungselement. Zugfedern haben den Vorteil, dass sie eine konstante Rückstellkraft erzeugen, wodurch das Sicherungselement nach einer Betätigung automatisch wieder in die Ruhe- und Schließposition zurückkehrt. Zudem sind Zugfedern einfach zu integrieren, kostengünstig herstellbar und weisen eine hohe Lebensdauer auf.

Gemäß einer weiteren besonders bevorzugten Ausführungsform ist vorgesehen, dass die wenigstens eine Feder an einer Seitenwand des Kupplungsgehäuses, vorzugsweise an einer Außenseite einer Seitenwand des Kupplungsgehäuses, angeordnet ist. Die seitliche Anordnung der Feder an der Seitenwand des Kupplungsgehäuses sorgt für eine gut zugängliche Platzierung. Insbesondere die Montage an der Außenseite erleichtert Wartungs- und Austauschvorgänge, ohne dass das gesamte Kupplungsgehäuse geöffnet werden muss.

Gemäß einer weiteren besonders bevorzugten Ausführungsform ist vorgesehen, dass zwei Federn vorgesehen sind, die mit ihren jeweiligen ersten Federenden am Schwenkhebel an in Hochachsenrichtung übereinander liegenden, vorzugsweise auf gegenüberliegenden Schwenkhebelseiten angeordneten ersten und zweiten Halteelementen angebunden sind und die mit ihren zweiten Federenden am Kupplungsgehäuse an in Hochachsenrichtung übereinander liegenden dritten und vierten Halteelementen angebunden sind, vorzugsweise dergestalt, dass die Federn im Wesentlichen parallel und in Hochachsenrichtung beabstandet entlang einer Seitenwand des Kupplungsgehäuses, vorzugsweise entlang einer Außenseite einer Seitenwand des Kupplungsgehäuses, verlaufen. Die Verwendung von zwei oder auch mehr Federn mit jeweils definierten Anbindungen sorgt für eine symmetrische Kraftverteilung, wodurch der Schwenkhebel gleichmäßig belastet wird und ein stabiler Bewegungsablauf gewährleistet ist. Die Anordnung der Federn parallel und in Hochachsenrichtung beabstandet entlang der Seitenwand des Kupplungsgehäuses führt zu einer kompakten Bauweise, reduziert Querkräfte und minimiert Verschleiß. Dies trägt zur langlebigen, gleichmäßigen und zuverlässigen Funktion der Kupplungsvorrichtung bei.

Gemäß einer weiteren besonders bevorzugten Ausführungsform kann vorgesehen sein, dass das Sicherungselement einen, bezogen auf die Hochachsenrichtung, unteren Randbereich aufweist, der beabstandet oberhalb einer Bodenwand des Kupplungsgehäuses liegt. Der Abstand zwischen dem unteren Randbereich und der Bodenwand ist so konfiguriert, dass der untere Randbereich in der Ruhe- und Schließposition des Sicherungselements einen Randbereich eines Kupplungsauges eines Kupplungsgegenelements in dessen abgesenkter und am Zugbolzen eingehängter Position übergreift und/oder überdeckt. Alternativ ausgedrückt liegt der Randbereich des Kupplungsauges, bezogen auf die Hochachsenrichtung, unterhalb des unteren Randbereichs des Sicherungselements und untergreift diesen, vorzugsweise mit einem Überstand. Dadurch wird das Kupplungsgegenelement zuverlässig gegen ein Abheben vom Zugbolzen gesichert. Diese Anordnung gewährleistet eine besonders hohe Betriebssicherheit, da das Sicherungselement eine stabile Verriegelung des Kupplungsgegenelements ermöglicht und ein unbeabsichtigtes Lösen der Verbindung verhindert. Zudem sorgt die definierte Abstandsanordnung dafür, dass das Sicherungselement zuverlässig funktioniert, wodurch eine gleichbleibend sichere Kupplungsfunktion gewährleistet ist.

Gemäß einer weiteren besonders bevorzugten Ausgestaltung ist vorgesehen, dass das Sicherungselement durch eine zum Zugbolzen hin offene plattenförmige Halbschale als Fangschale ausgebildet ist, bevorzugt als U- oder V-förmige Halbschale, höchst bevorzugt mit durch die U- oder V-Schenkel gebildeten beidseitigen Einführschrägen. Durch diese Gestaltung wird eine zuverlässige und selbstzentrierende Aufnahme des Kupplungsgegenelements ermöglicht, wodurch der Kuppelvorgang insbesondere unter erschwerten Bedingungen, wie beispielsweise bei schlechter Sicht oder ungenauer Positionierung, erheblich erleichtert wird. Die Ausbildung als Fangschale unterstützt zudem eine automatische Führung des Kupplungsgegenelements, sodass eine präzise Ausrichtung nicht erforderlich ist und die Kupplung schnell, einfach und fehlervermeidend erfolgen kann. Die offene Bauweise ermöglicht eine sichere Aufnahme des Kupplungsgegenelements.

Wie bereits zuvor ausgeführt, eignet sich die erfindungsgemäße Kupplungsvorrichtung grundsätzlich für alle Kupplungsvorgänge, bei denen eine Zugbolzen funktionssicher mit einem Kupplungsauge eines Kupplungsgegenelementes gekuppelt und das Kupplungsauge gegen Abheben geschützt werden soll. Aufgrund dieser Eigenschaften ist die Kupplungsvorrichtung insbesondere für den Einsatz bei Transportfahrzeugen, insbesondere bei fahrbaren Transportbehältern und/oder fahrbaren Entsorgungslogistikbehältern, im Produktions- und/oder Montagebereich von Industrieunternehmen geeignet. Besonders vorteilhaft ist die Verwendung in Zugverbänden, bei denen eine Zugmaschine mit mehreren Transportfahrzeugen gekoppelt wird.

Dementsprechend beansprucht eine weitere erfindungsgemäße Lösung auch ein Transportfahrzeug mit einer Kupplungsvorrichtung wie sie vorstehend ausführlich beschrieben worden ist.

Das Transportfahrzeug weist gemäß einer besonders bevorzugten ersten konkreten Ausführungsform eine Deichsel als Kupplungsgegenelement aufweist, die ein Deichselauge als Kupplungsauge aufweist, das geeignet und/oder ausgebildet ist, an einem Zugbolzen einer Kupplungsvorrichtung, vorzugsweise an einem Zugbolzen einer mit der Kupplungsvorrichtung im Wesentlichen baugleichen Kupplungsvorrichtung, eines weiteren Transportfahrzeugs eingehängt und angekoppelt sowie mit einem zugeordneten Sicherungselement gegen Abheben gesichert zu werden, insbesondere zur Ausbildung eines Zugverbands aus mehreren Transportfahrzeugen. Durch diese Gestaltung wird eine sichere und zuverlässige Verbindung zwischen Transportfahrzeugen, insbesondere auch innerhalb eines Zugverbands gewährleistet. Die erfindungsgemäße Kupplungsvorrichtung verhindert dabei ein unbeabsichtigtes Lösen der Verbindung und sorgt somit für eine erhöhte Betriebssicherheit. Insbesondere im Bereich der innerbetrieblichen Logistik und der Entsorgungslogistik ermöglicht diese Lösung ein einfaches und effizientes Kuppeln und Entkuppeln, wodurch Transportprozesse optimiert und Stillstandszeiten minimiert werden.

Gemäß einer besonders bevorzugten konkreten Weiterbildung ist vorgesehen, dass die Kupplungsvorrichtung, bezogen auf eine Vorwärtsfahrtrichtung des Transportfahrzeugs, in etwa in der Längsmitte einer Rückseite eines Fahrgestells des Transportfahrzeugs, vorzugsweise bodenseitig oder in Bodennähe, angeordnet ist, während die Deichsel als Kupplungsgegenelement mit einem endseitigen Deichselauge als Kupplungsauge in etwa in der Längsmitte einer in Vorwärtsfahrtrichtung gegenüberliegenden Frontseite des Fahrgestells, vorzugsweise bodenseitig oder in Bodennähe, angeordnet ist. Durch diese symmetrische Anordnung der Kupplungselemente wird eine präzise und wiederholgenaue Ausrichtung der Transportfahrzeuge innerhalb eines Zugverbands erleichtert. Die Platzierung bodenseitig oder in Bodennähe ermöglicht eine stabile Kraftübertragung und minimiert Hebelwirkungen, die sich negativ auf die Fahrstabilität auswirken könnten. Darüber hinaus sorgt diese Anordnung für eine kompakte Bauweise, die den Platzbedarf reduziert und die Manövrierfähigkeit des Zugverbands verbessert. Dies ist insbesondere in beengten Betriebsumgebungen oder bei häufigem Rangieren von Vorteil.

Gemäß einer besonders bevorzugten Ausgestaltung kann zudem vorgesehen sein, dass die Deichsel mit dem Fahrgestell über ein Schwenklager verbunden ist und von einer abgeklappten, in etwa horizontalen Funktionsstellung in eine etwa vertikale Ruhestellung hochklappbar ist, wobei bevorzugt vorgesehen ist, dass die Deichsel in ihrer horizontalen Funktionsstellung in etwa auf Höhe des Zugbolzens und/oder des Einführfreiraums der Kupplungsvorrichtung eines weiteren Transportfahrzeugs liegt. Diese Gestaltung ermöglicht eine platzsparende und sichere Verstauung der Deichsel in der vertikalen Ruhestellung, wodurch das Transportfahrzeug insbesondere bei Nichtgebrauch oder im abgestellten Zustand kompakt bleibt und Stolperstellen oder Beschädigungen durch überstehende Teile vermieden werden. Durch die Anordnung der Deichsel in ihrer horizontalen Funktionsstellung auf Höhe des Zugbolzens und/oder des Einführfreiraums wird ein präzises und einfaches Ankoppeln an eine Kupplungsvorrichtung eines weiteren Transportfahrzeugs erleichtert, was insbesondere für eine schnelle und wiederholgenaue Verbindung innerhalb eines Zugverbands vorteilhaft ist.

Gemäß einer besonders bevorzugten Ausführungsform kann ferner vorgesehen sein, dass das Transportfahrzeug ein fahrbarer Transportbehälter und/oder ein fahrbarer Entsorgungslogistikbehälter ist. Diese Bauweise erlaubt eine flexible Nutzung in unterschiedlichen Anwendungsbereichen, insbesondere für den innerbetrieblichen Materialtransport und für die Entsorgungslogistik. Fahrbare Transportbehälter ermöglichen eine effiziente Handhabung und eine ergonomische Beladung, während fahrbare Entsorgungslogistikbehälter gezielt für die Sammlung und den Abtransport von Produktions- oder Verpackungsabfällen eingesetzt werden können. Dadurch wird eine optimierte und zeitsparende Logistik innerhalb von Produktions- und Montagebetrieben sichergestellt.

Gemäß einer besonders bevorzugten Ausführungsform kann weiterhin vorgesehen sein, dass das Transportfahrzeug eine rechteckige Behälter-Unterwand als Bestandteil eines Fahrgestells mit Fahrrollen und mit einer Mehrzahl, vorzugsweise vier, Vertikalwänden aufweist, wobei die Vertikalwände an den Seitenkanten der Behälter-Unterwand anschließen. Durch diese Bauweise wird eine stabile und belastbare Transportlösung geschaffen, die eine effiziente Raumausnutzung erlaubt. Die Fahrrollen gewährleisten eine hohe Mobilität, sodass das Transportfahrzeug auch in beengten Bereichen problemlos manövrierbar ist. Die an den Seitenkanten der Behälter-Unterwand anschließenden Vertikalwände sorgen für eine geschlossene Ladefläche, die eine sichere Aufnahme von Transportgut ermöglicht und ein Verrutschen oder Herabfallen der Ladung verhindert.

Gemäß einer weiteren besonders bevorzugten Ausführungsform kann schließlich auch vorgesehen sein, dass das Transportfahrzeug eine mittels einer Antriebseinrichtung, vorzugsweise mittels einer Elektromaschine, antreibbare Zugmaschine ist. Durch die Bereitstellung einer solchen Zugmaschine wird die Möglichkeit geschaffen, mehrere Transportfahrzeuge innerhalb eines Zugverbands zuverlässig und effizient zu bewegen. Insbesondere ermöglicht die motorisierte Antriebseinheit, dass auch größere und schwerere Transportbehälter oder Entsorgungslogistikbehälter mit minimalem Kraftaufwand befördert werden können. Der Einsatz einer Elektromaschine als Antrieb bietet dabei den zusätzlichen Vorteil eines emissionsfreien und geräuscharmen Betriebs, wodurch sich die Zugmaschine besonders für den Einsatz in Produktions- und Montagebereichen, Innenräumen oder umweltsensiblen Zonen eignet.

Dementsprechend wird weiter auch ein Zugverband mit einer derartigen Zugmaschine und wenigstens einem Transportfahrzeug beansprucht, das eine Kupplungsvorrichtung und eine Deichsel als Kupplungsgegenelement aufweist. Diese Kombination ermöglicht, wie bereits zuvor ausgeführt, eine zuverlässige und wiederholgenaue Verbindung zwischen den Transportfahrzeugen, sodass eine sichere und effiziente Beförderung von Gütern innerhalb logistischer Prozesse gewährleistet ist.

Gemäß einer besonders bevorzugten Ausgestaltung hierzu weist der Zugverband eine Mehrzahl von zumindest hinsichtlich der Kupplungsvorrichtungen und der Deichseln, vorzugsweise auch hinsichtlich der Anordnung der Kupplungsvorrichtungen und der Deichseln, baugleiche Transportfahrzeuge auf. Eine solche einheitliche Bauweise vereinfacht das Kuppeln und Entkuppeln, reduziert den Wartungsaufwand und verbessert die Austauschbarkeit der einzelnen Fahrzeuge innerhalb des Verbands.

Anhand einer Zeichnung wird beispielhaft eine Ausführungsform der Erfindung näher erläutert.

Es zeigen:
- Fig. 1: ein Transportfahrzeug 1 als fahrbarer Transportbehälter in einer Ansicht von unten,
- Fig. 2: das Transportfahrzeug 1 nach Figur 1 in einer perspektivischen Ansicht schräg von unten,
- Fig. 3: das Transportfahrzeug 1 nach Figur 1 in einer Rückansicht,
- Fig. 4: das Transportfahrzeug 1 nach Figur 1 in einer Seitenansicht,
- Fig. 5: eine Kupplungsvorrichtung 2 des Transportfahrzeugs 1 in perspektivischer vergrößerter Darstellung ohne montierte Federn,
- Fig. 6: eine Draufsicht auf die Kupplungsvorrichtung nach Figur 5 mit montierten Federn, und
- Fig. 7: eine Kupplungsvorrichtung 2 mit angekoppelter Deichsel.

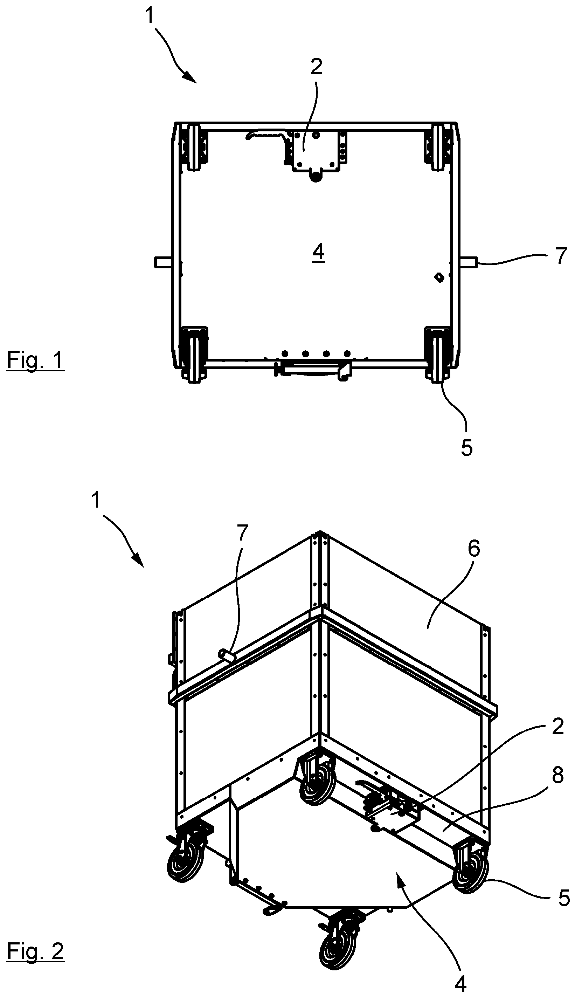

In den Figuren 1 bis 4 ist ein Transportfahrzeug 1 als fahrbarer Transportbehälter in unterschiedlichen Ansichten dargestellt mit einer rechteckigen Behälter-Unterwand 4 als Bestandteil eines Fahrgestells mit Fahrrollen 5 und Vertikalwänden 6, die sich an den Seitenkanten der Behälter-Unterwand 4 anschließen. Damit ist ein nach oben offener Normbehälter gebildet mit etwa horizontal abstehenden Schwenkzapfen 7. Mittels der Schwenkzapfen 7 kann der Behälter mit Hub- und/oder Kippvorrichtungen automatisiert entleert werden.

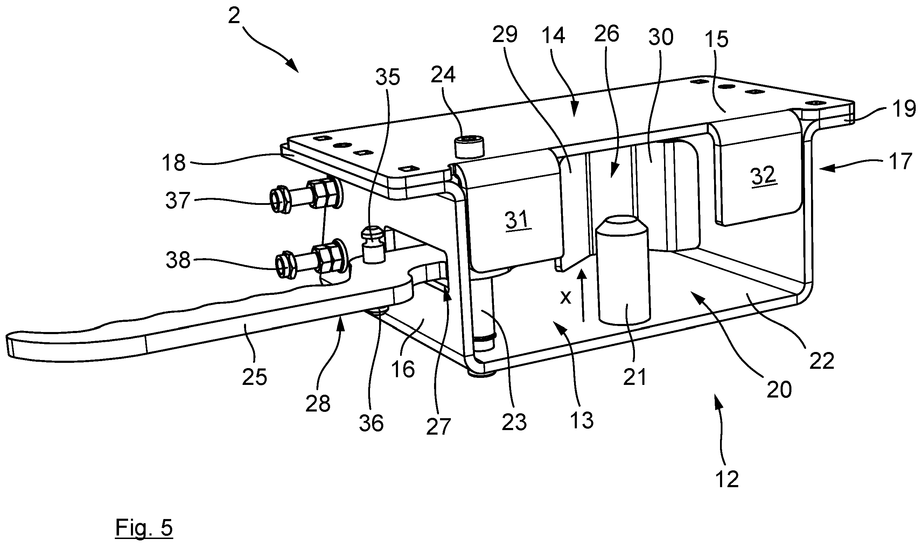

Im Bereich einer Rückseite des Transportfahrzeugs 1 ist in Bodennähe an einer Bodenplatte 8 von unten her eine Kupplungsvorrichtung 2 angeordnet, die anhand der Figuren 5 bis 7 näher erläutert wird.

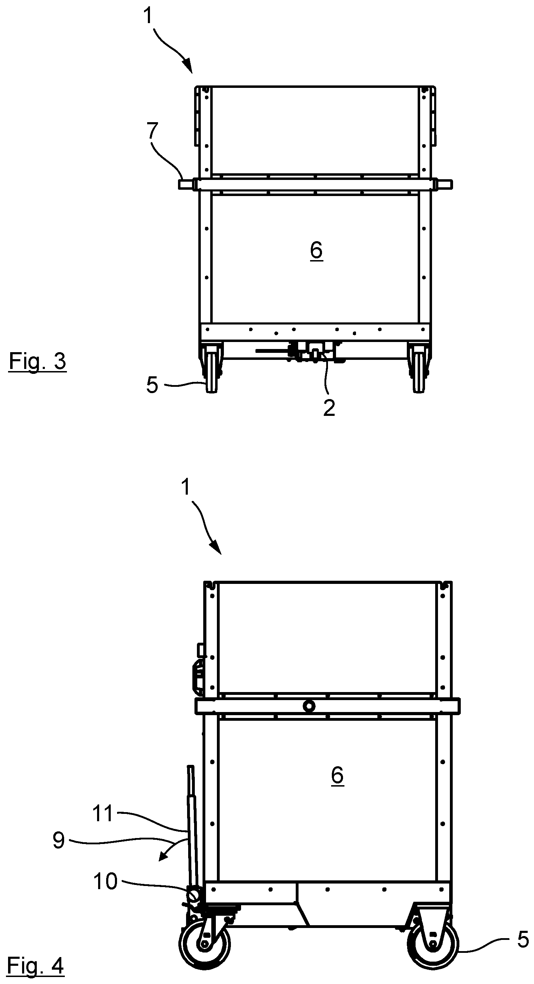

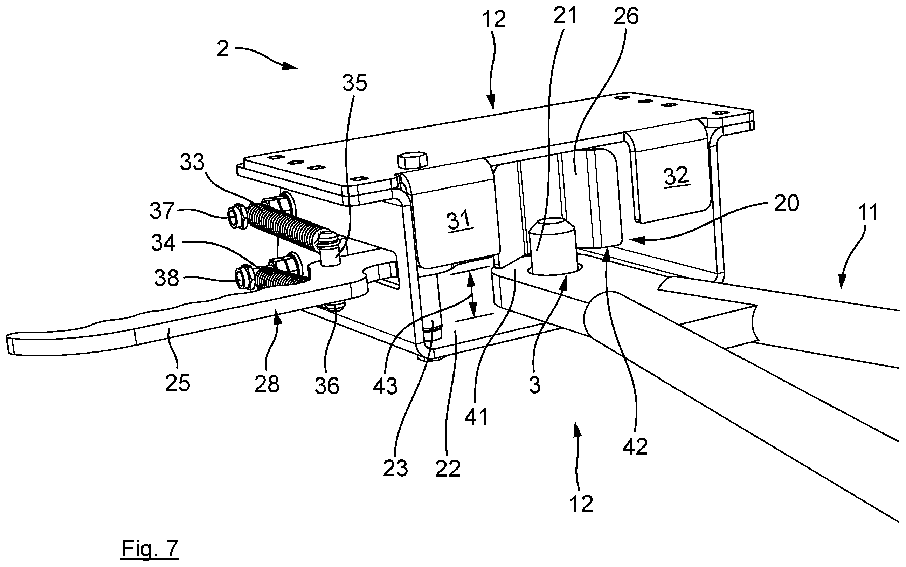

Gegenüberliegend zur Kupplungsvorrichtung 2 ist am Transportfahrzeug eine Deichsel als Kupplungsgegenelement 11 mit einem Schwenklager 10 verbunden, die von der in Figur 4 dargestellten, etwa vertikalen Ruhestellung in eine etwa horizontale Funktionsstellung abklappbar ist (Pfeil 9). Wie aus Figur 7 ersichtlich, ist die Deichsel als Kupplungsgegenelement 11 hier lediglich beispielhaft als Dreieckkonstruktion mit einem endseitigen Deichselauge als Kupplungsauge 3 ausgebildet.

Mit mehreren Transportfahrzeugen 1 kann ersichtlich ein Zugverband als Transportsystem aufgebaut werden, wobei beispielsweise Transportfahrzeuge 1 an unterschiedlichen Orten in einem Produktionsbereich eines Industrieunternehmens zur Sammlung und Entsorgung von Abfällen angeordnet sind. Bei Bedarf, insbesondere bei vollen Behältern, können mehrere Transportfahrzeuge zusammenhängend von einer Zugmaschine abgeholt und abtransportiert werden. Damit ist eine variable Nutzung der Transportfahrzeuge 1 und eine variable Bildung von Zugverbänden möglich.

In der beispielhaften konkreten Ausführungsform der Kupplungsvorrichtung 2 nach den Figuren 5 bis 7 weist diese ein beispielhaft quaderförmiges Kupplungsgehäuse 12 auf, das ein Basisteil 13 und ein Oberteil 14 aufweist, die hier zum Beispiel als Blechteile ausgebildet sind.

Das Basisteil 13 ist U-förmig ausgebildet und weist eine Bodenwand 22 sowie zwei seitlich gegenüberliegende und nach oben weisende, vorzugsweise abgekantete, Seitenwände 16, 17, hier beispielhaft mit endseitigen Seitenflanschen 18, 19 auf.

Das Oberteil 14 weist eine das Basisteil 13 oberseitig verschließende Deckenwand 15, vorzugsweise eine im wesentlichen plane Deckenwand 15, auf und ist mit den Seitenwänden 16, 17 im hier gezeigten Beispielfall über die Seitenflanschen 18, 19 verbunden.

Das Kupplungsgehäuse 12 liegt im montierten Zustand der Kupplungsvorrichtung 2 mit der Deckenwand 15 von unten her an der Bodenplatte 8 des Transportfahrzeugs 1 an, was insbesondere aus den Figuren 2 und 3 ersichtlich ist. Die Anbindung der Kupplungsvorrichtung 2 an der Bodenplatte 8 kann beispielsweise mittels einer Schweiß- oder Schraubenverbindung, bevorzugt mittels einer Schraubenverbindung. Hierzu können die Seitenflansche 18, 19 sowie die Deckenwand 15 miteinander fluchtende Schraublöcher (siehe Figuren 5 und 7) aufweisen, über die die bevorzugt lösbare Anbindung an die Bodenplatte 8 erfolgt.

Das Kupplungsgehäuse 12 weist eine Einführöffnung 20 für ein Kupplungsauge 3 einer Deichsel 11 auf, wie dies zum Beispiel aus der Figur 7 ersichtlich ist.

In der Einführöffnung 20 ist ein in etwa in Hochachsenrichtung x (Figur 5) nach oben frei abragender und mit dem Basisteil 13 bzw. der Bodenwand 22 verbundener Zugbolzen 21 angeordnet.

Beabstandet zum Zugbolzen 21 ist zwischen der Deckenwand 15 des Oberteils 14 und der Bodenwand 22 des Basisteils 13 eine vertikale Achse 23 angeordnet. Die vertikale Achse 23 dient hier als Schwenkachse und ist beispielhaft durch ein Achsrohr gebildet, das zum Beispiel mit Schrauben 24 zum einen an der Deckenwand 15 und zum anderen an der Bodenwand 25 befestigt ist.

Auf die Schwenkachse 23 ist ein zweiseitiger Schwenkhebel 28 gelagert, hier beispielhaft aufgesteckt, der einerseits als Betätigungshebelteil 25 ausgebildet ist und an der gegenüberliegenden Seite ein als Fangschale ausgebildetes Sicherungselement 26 aufweist. Der Betätigungshebelteil 25 ragt dabei aus einer Hebelöffnung 27 frei zugänglich aus der Seitenwand 16 heraus.

Die Fangschale 26 am Schwenkhebel 28 ist hier beispielhaft als zum Zugbolzen 21 hin offene plattenförmige und in etwa U-förmige Halbschale mit zwei seitlich voneinander beabstandeten und durch die U-Schenkel gebildeten Einführschrägen 29, 30 ausgebildet.

Wie dies aus den Figuren 5 und 7 weiter gut ersichtlich ist, weist das Oberteil 14 an der Einführöffnung 20 des Kupplungsgehäuses 12 zu beiden Seiten des Zugbolzens 21 und damit auch beidseitig der Fangschale 26 in die Einführöffnung 20 einragende Laschen 31, 32 aufweist, die die Einführöffnung 20 teilweise abdecken.

Wie aus den Figuren 5 und 7 weiter ersichtlich ist, sind die Laschen 31, 32 hier bevorzugt einstückig mit der Deckenwand 15 des Oberteils 14 ausgebildet und aus dieser nach unten, bezogen auf die Hochachsenrichtung, abgebogen bzw. abgekantet. Die Laschen 31, 32 erstrecken sich bevorzugt und wie hier gezeigt im Wesentlichen parallel zu den Seitenwänden 16, 17 des Basisteils 13 und stehen in Richtung der Bodenwand 22 vor. Wie insbesondere aus Figur 7 ersichtlich ist, enden die Laschen 31, 32 in der Ruhe- und Schließposition des Sicherungselementes 26 beabstandet oberhalb der Bodenwand 22 sowie beabstandet oberhalb des Kupplungsauges 3, sodass ein Schwenkspalt für ein ungehindertes Verschwenken des hier beispielhaft als Deichsel 11 ausgebildeten Kupplungsgegenelementes 11 ausgebildet ist bzw. freibleibt.

Die Laschen 31, 32 begrenzen die Einführöffnung 20 somit seitlich und oberseitig teilweise, sodass das Kupplungsauge 3 beim Einführen in Richtung des Zugbolzens 21 seitlich geführt wird. Gleichzeitig wird ein unbeabsichtigtes seitliches Ausheben oder Verkanten des Kupplungsauges 3 im Bereich der Einführöffnung erschwert.

Durch diese konstruktive Ausgestaltung wird die Einführöffnung 20 geometrisch definiert, ohne dass zusätzliche separate Führungselemente erforderlich sind. Der Schwenkhebel 28 ist mittels hier beispielhaft und besonders bevorzugt zweier Zugfedern 33, 34 als Vorspannelement in seiner in der Figur 5 gezeigten Ruhe- und Schließposition so an der Schwenkachse 23 gehalten, dass die Fangschale 26 in Richtung auf den Zugbolzen 21 hin vorgespannt ist.

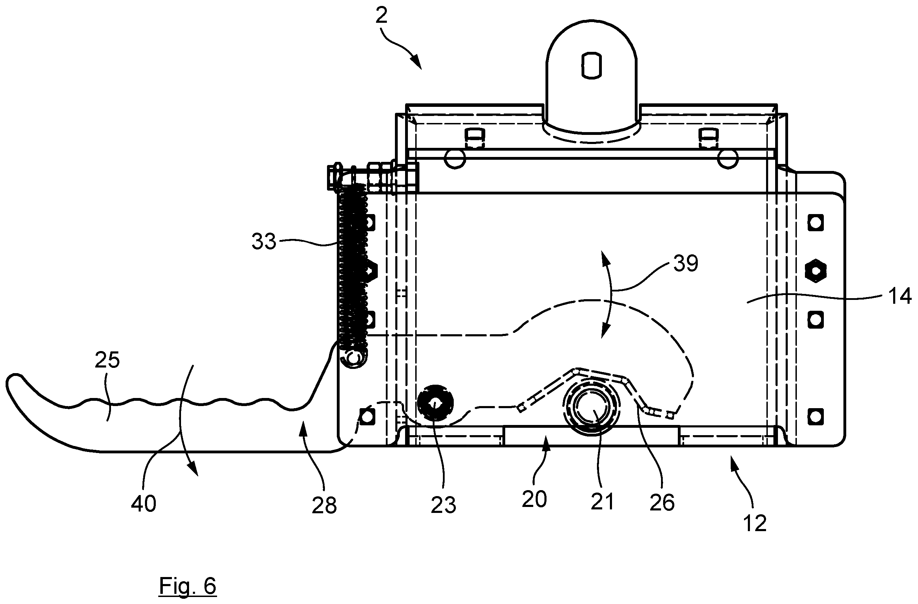

Die hier lediglich beispielhaft als Spiralfedern ausgebildeten Zugfedern 33, 34 sind in der Darstellung der Figur 5 noch nicht montiert und erst in den Figuren 6 und 7 gezeigt. Dort sind die zwei Zugfedern 33, 34 lediglich beispielhaft mit ihren jeweiligen ersten Federenden am Schwenkhebel 28 an in Hochachsenrichtung x übereinander liegenden und hier lediglich beispielhaft auf gegenüberliegenden Schwenkhebelseiten angeordneten ersten und zweiten Halteelementen 35, 36 angebunden und mit ihren zweiten Federenden am Kupplungsgehäuse 20 an in Hochachsenrichtung x übereinander liegenden dritten und vierten Halteelementen 37, 38 angebunden. Die Halteelemente 35, 36, 37 und 38 sind hier lediglich beispielhaft durch Haltebolzen gebildet, an denen die Federenden einhängbar sind.

Wie dies aus den Figuren 6 und 7 weiter gut ersichtlich ist, verlaufen die Federn 33, 34 im Wesentlichen parallel und in Hochachsenrichtung beabstandet entlang einer Außenseite einer Seitenwand 16 des Kupplungsgehäuses 20. Die Zugfedern 33, 34 sind so ausgelegt, dass sie eine Vorspannung der Fangschale 26 auf den Zugbolzen 21 hin bewirken.

In der Draufsicht auf die Kupplungsvorrichtung 2 nach Figur 6 ist der Bereich des Schwenkhebels 28 mit der vom Oberteil 14 abgedeckten Fangschale strichliert eingezeichnet. Durch die Federkraft der Zugfedern 33 und 34 ist der Schwenkhebel 28 in einer Ruhestellung auf den Zugbolzen 21 hin verschwenkt und liegt beispielsweise dort an (Pfeil 39). Andererseits kann durch Betätigung des Betätigungshebelteils 25 dieses nach außen verschwenkt werden (Pfeil 40), wodurch die Fangschale 26 entgegen der Federkraft der Zugfedern 33, 34 vom Zugbolzen 21 nach hinten wegbewegt wird.

Die Funktion der Kupplungsvorrichtung 2 wird anhand der Figur 7 erläutert:
Für einen Kupplungsvorgang der Deichsel 11 mit der Kupplungsvorrichtung 2 wird das Deichselauge 3 über dem Zugbolzen 21 in die Fangschale 26 eingeführt und mit dem Randbereich 41 gegen die Federkraft der Zugfedern 33, 34 in das Kupplungsgehäuse 12 eingeführt, bis das Deichselauge 3 über dem Zugbolzen 21 liegt. Dann wird das Deichselauge 3 über den Zugbolzen 21 in die in Figur 7 dargestellte Kupplungs- bzw. Koppelposition nach unten bewegt. Dies kann beispielsweise durch das Gewicht einer abklappenden Deichsel 11 erfolgen. Wie insbesondere aus Figur 7 ersichtlich, ist die Fangschale 26 so angeordnet, dass zwischen ihrem, bezogen auf die Hochachsenrichtung x, unteren Randbereich 42 und der Bodenwand 22 des Kupplungsgehäuses 12 ein Freiraum 43 ausgebildet ist, so dass die Fangschale 26 nach dem Absenken des Deichselauges 3 in die Kupplungs- bzw. Koppelposition durch die Federkraft der Zugfedern 33, 34 zurück in Richtung auf den Zugbolzen 21 schwenkt und damit mit ihrem unteren Randbereich 42 den Randbereich 41 (wie dargestellt) übergreift bzw. überdeckt und damit das Deichselauge 3 gegen ein Abheben vom Zugbolzen 21 sichert.

Zur Freigabe der Kopplung kann die Fangschale 26 mit dem Betätigungshebelteil 25 gegen die Federkraft der Zugfedern 33, 34 wieder in eine Freigabeposition zurückbewegt werden, wodurch das Deichselauge 3 zur Lösung der Kopplung vom Zugbolzen 21 wieder abgehoben werden kann.

### Bezugszeichenliste

- 1: Transportfahrzeug
- 2: Kupplungsvorrichtung
- 3: Kupplungsauge/Deichselauge
- 4: Behälter-Unterwand
- 5: Fahrrollen
- 6: Vertikalwand
- 7: Schwenkzapfen
- 8: Bodenplatte
- 9: Pfeil
- 10: Schwenklager
- 11: Kupplungsgegenelement/Deichsel
- 12: Kupplungsgehäuse
- 13: Basisteil
- 14: Oberteil
- 15: Deckenwand
- 16: Seitenwand
- 17: Seitenwand
- 18: Seitenflansch
- 19: Seitenflansch
- 20: Einführöffnung
- 21: Zugbolzen
- 22: Bodenwand
- 23: Schwenkachse
- 24: Schrauben
- 25: Betätigungshebelteil
- 26: Sicherungselement/Fangschale
- 27: Hebelöffnung
- 28: Schwenkhebel
- 29: Einführschräge
- 30: Einführschräge
- 31: Lasche
- 32: Lasche
- 33: Zugfeder
- 34: Zugfeder
- 35: Halteelement
- 36: Halteelement
- 37: Halteelement
- 38: Halteelement
- 39: Pfeil
- 40: Pfeil
- 41: Randbereich
- 42: unterer Randbereich
- 43: Freiraum

## Patentansprüche

1. Kupplungsvorrichtung zur Ankopplung eines Kupplungsgegenelementes, bevorzugt zur Ankopplung einer Deichsel eines Transportfahrzeugs,
mit einem Zugbolzen (21), der in Hochachsenrichtung gesehen vertikal nach oben abragt,
mit einem Sicherungselement (26), das dem Zugbolzen (21) zugeordnet ist und/oder das in einer Ruhe- und Schließposition mittels eines Vorspannelementes (33, 34) in eine definierte Richtung, vorzugsweise in Richtung des Zugbolzens (21), vorgespannt ist,
wobei das Sicherungselement (26) dergestalt beweglich gelagert ist, dass das Sicherungselement (26) gegen die Vorspannkraft des Vorspannelements (33, 34) aus der Ruhe- und Schließposition in eine Freigabeposition verlagerbar ist, in der ein Kupplungsauge (3) eines Kupplungsgegenelementes (11) nach unten in Richtung der Kupplungsposition absenkbar ist, wobei das Sicherungselement (26) nach einem definierten Absenkweg des Kupplungsgegenelementes (11) dergestalt positioniert ist, dass das Vorspannelement (33, 34) zurück in die Ruhe- und Schließposition verlagerbar ist, in der das Sicherungselement (26) einen Randbereich (41) des am Zugbolzen (21) eingehängten Kupplungsauges (3) übergreift und das Kupplungsgegenelement (11) gegen ein Abheben vom Zugbolzen (21) sichert.

2. Kupplungsvorrichtung nach Anspruch 1, **dadurch gekennzeichnet, dass** die Kupplungsvorrichtung (2) ein, vorzugsweise quaderförmiges, Kupplungsgehäuse (12) aufweist, wobei bevorzugt vorgesehen ist, dass das Kupplungsgehäuse (12) eine Bodenwand (22), eine Deckenwand (15) und wenigstens eine Seitenwand (16, 17), vorzugsweise zwei voneinander in Querrichtung beabstandete und einander in Querrichtung gegenüberliegende Seitenwände (16, 17), aufweist.

3. Kupplungsvorrichtung nach Anspruch 2, **dadurch gekennzeichnet, dass** das Kupplungsgehäuse (12) eine Einführöffnung (20) aufweist, an die sich ein Einführfreiraum anschließt, der den Zugbolzen (21) umgibt und ausgebildet ist, ein in diesem über dem Zugbolzen (21) positioniertes Kupplungsauge (3) eines Kupplungsgegenelements (11), vorzugsweise ein in diesem über dem Zugbolzen (21) positioniertes Deichselauge einer Deichsel, aufzunehmen und entlang des Zugbolzens (21) nach unten in Richtung einer Kupplungsposition abzusenken.

4. Kupplungsvorrichtung nach Anspruch 2 oder 3, **dadurch gekennzeichnet,**
**dass** das Kupplungsgehäuse (20) ein Basisteil (13) und ein Oberteil (14) aufweist,
**dass** das Basisteil (13) U-förmig ausgebildet ist und eine Bodenwand (22) sowie zwei seitlich gegenüberliegende und nach oben weisende Seitenwände (16, 17), vorzugsweise mit endseitigen Seitenflanschen (18, 19), aufweist,
**dass** das Oberteil (14) eine das Basisteil (13) oberseitig verschließende Deckenwand (15) aufweist und mit den Seitenwänden (16, 17), vorzugsweise mit den Seitenflanschen (18, 19), verbunden ist, wobei bevorzugt vorgesehen ist, dass das Oberteil (14) an einer Einführöffnung (20) des Kupplungsgehäuses (12) zu beiden Seiten des Zugbolzens (21) und damit auch beidseitig des Sicherungselementes (26) in die Einführöffnung (20) einragende Laschen (31, 32) aufweist, die die Einführöffnung (20) teilweise abdecken.

5. Kupplungsvorrichtung nach einem der vorhergehenden Ansprüche, **dadurch gekennzeichnet, dass** das Sicherungselement (26) mit einer, vorzugsweise an der Kupplungsvorrichtung (2) angeordneten, Sicherungselement-Betätigungseinrichtung zusammenwirkt, mit der das Sicherungselement (26) gegen die Vorspannkraft des Vorspannelementes (33, 34) in die Freigabeposition verlagerbar ist.

6. Kupplungsvorrichtung nach Anspruch 5, **dadurch gekennzeichnet, dass** die Sicherungselement-Betätigungseinrichtung durch einen an der Kupplungsvorrichtung (2) schwenkbar gelagerten Schwenkhebel (28) gebildet ist, der an seiner ersten Hebelseite das Sicherungselement (26) und an seiner zweiten Hebelseite ein für eine Betätigung, vorzugsweise für eine Hand- und/oder Fußbetätigung, von außerhalb der Kupplungsvorrichtung (2) frei zugängliches Betätigungshebelteil (25) aufweist, mit dem das Sicherungselement (26) gegen die Vorspannkraft des Vorspannelementes (33, 34) in die Freigabeposition schwenkbar ist.

7. Kupplungsvorrichtung nach Anspruch 6, **dadurch gekennzeichnet, dass** der Schwenkhebel (28) schwenkbar an einer vertikalen Achse (23) der Kupplungsvorrichtung gelagert ist, wobei bevorzugt vorgesehen ist, dass sich die vertikale Achse (23) im Wesentlichen in Hochachsenrichtung, bevorzugt im Kupplungsgehäuse (12), höchst bevorzugt im Kupplungsgehäuse (12) zwischen der Bodenwand (12) und der Deckenwand (14), erstreckt

8. Kupplungsvorrichtung nach Anspruch 7, **dadurch gekennzeichnet, dass** die vertikale Achse (23) durch ein Achsrohr gebildet ist, das mittels Schrauben (24) zum einen an der Deckenwand (15) und zum anderen an der Bodenwand (25) befestigt ist.

9. Kupplungsvorrichtung nach einem der Ansprüche 5 bis 8, **dadurch gekennzeichnet, dass** das Vorspannelement (33, 34) einerseits mit dem Kupplungsgehäuse (20) und andererseits mit der Sicherungselement-Betätigungseinrichtung verbunden ist.

10. Kupplungsvorrichtung nach einem der vorhergehenden Ansprüche, **dadurch gekennzeichnet, dass** das Vorspannelement (33, 34) durch wenigstens eine Feder, vorzugsweise durch wenigstens eine Zugfeder, gebildet ist.

11. Kupplungsvorrichtung nach Anspruch 9 und 10, **dadurch gekennzeichnet, dass** die wenigstens eine Feder (33, 34) an einer Seitenwand (16) des Kupplungsgehäuses (20), vorzugsweise an einer Außenseite einer Seitenwand (16) des Kupplungsgehäuses (20), angeordnet ist.

12. Kupplungsvorrichtung nach Anspruch 10 oder 11, **dadurch gekennzeichnet, dass** zwei Federn (33, 34) vorgesehen sind, die mit ihren jeweiligen ersten Federenden am Schwenkhebel (28) an in Hochachsenrichtung übereinander liegenden, vorzugsweise auf gegenüberliegenden Schwenkhebelseiten, angeordneten ersten und zweiten Halteelementen (35, 36) angebunden sind und die mit ihren zweiten Federenden am Kupplungsgehäuse (20) an in Hochachsenrichtung übereinander liegenden dritten und vierten Halteelementen (37, 38) angebunden sind, vorzugsweise dergestalt, dass die Federn (33, 34) im Wesentlichen parallel und in Hochachsenrichtung beabstandet entlang einer Seitenwand (16) des Kupplungsgehäuses (20), vorzugsweise entlang einer Außenseite einer Seitenwand (16) des Kupplungsgehäuses (20), verlaufen.

13. Kupplungsvorrichtung nach einem der Ansprüche 2 bis 12, **dadurch gekennzeichnet, dass** das Sicherungselement (26) einen, bezogen auf die Hochachsenrichtung, unteren Randbereich (42) aufweist, der beabstandet oberhalb einer Bodenwand (22) des Kupplungsgehäuses (12) liegt, wobei der Abstand zwischen dem unteren Randbereich (42) und der Bodenwand (22) so konfiguriert ist, dass der untere Randbereich (42) in der Ruhe- und Schließposition des Sicherungselementes (26) einen Randbereich (41) eines Kupplungsauges (3) eines Kupplungsgegenelementes (11) in dessen abgesenkter und am Zugbolzen (21) eingehängter Position übergreift und/oder überdeckt und das Kupplungsgegenelement (11) gegen ein Abheben vom Zugbolzen (21) sichert.

14. Transportfahrzeug mit einer Kupplungsvorrichtung (2) nach einem der vorhergehenden Ansprüche.

15. Zugverband mit einem Transportfahrzeug, das eine mittels einer Antriebseinrichtung, vorzugsweise mittels einer Elektromaschine, antreibbare Zugmaschine ist, und mit wenigstens einem Transportfahrzeug nach Anspruch 15, das weiter eine Deichsel als Kupplungsgegenelement (11) aufweist, die ein Deichselauge als Kupplungsauge (3) aufweist, das geeignet und/oder ausgebildet ist, an einem Zugbolzen (21) einer Kupplungsvorrichtung (2), vorzugsweise an einem Zugbolzen (21) einer mit der Kupplungsvorrichtung (2) im Wesentlichen baugleichen Kupplungsvorrichtung (2), eines weiteren Transportfahrzeugs (1) eingehängt und angekoppelt sowie mit einem zugeordneten Sicherungselement (26) gegen Abheben gesichert zu werden, insbesondere zur Ausbildung eines Zugverbands aus mehreren Transportfahrzeugen.
